# EUROPEAN PATENT SPECIFICATION

(11) **EP 1 520 753 B1**
(45) Date of publication and mention of the grant of the patent: **14.03.2007**
(21) Application number: 04022058.4
(22) Date of filing: 16.09.2004
(51) Int. Cl.: B60R 21/20, B60N 2/427

(54) **Passenger protecting device**
Insassenschutzvorrichtung
Dispositif de protection des passagers

(30) Priority: 30.09.2003 JP 2003340822
(43) Date of publication of application: 06.04.2005
(73) Proprietor: TAKATA CORPORATION, Minato-ku, Tokyo 106-8510 (JP)
(72) Inventor: Yoshikawa, Hiromichi, Tokyo 106-8510 (JP); Sakai, Katsuyuki, Tokyo 106-8510 (JP)
(74) Representative: Banzer, Hans-Jörg

(56) References cited:
- PATENT ABSTRACTS OF JAPAN vol. 1995, no. 06, 31 July 1995 (1995-07-31) -& JP 07 081466 A (NISSAN MOTOR CO LTD), 28 March 1995 (1995-03-28)
- PATENT ABSTRACTS OF JAPAN vol. 2002, no. 07, 3 July 2002 (2002-07-03) -& JP 2002 079862 A (TOYODA GOSEI CO LTD), 19 March 2002 (2002-03-19)
- PATENT ABSTRACTS OF JAPAN vol. 2002, no. 07, 3 July 2002 (2002-07-03) -& JP 2002 079861 A (TOYODA GOSEI CO LTD), 19 March 2002 (2002-03-19)
- PATENT ABSTRACTS OF JAPAN vol. 1998, no. 13, 30 November 1998 (1998-11-30) -& JP 10 217818 A (IKEDA BUSSAN CO LTD), 18 August 1998 (1998-08-18)
- PATENT ABSTRACTS OF JAPAN vol. 2002, no. 10, 10 October 2002 (2002-10-10) -& JP 2002 160566 A (TAKATA CORP), 4 June 2002 (2002-06-04)

## Description

The present invention relates to a passenger protecting device for protecting a passenger in a seat in a vehicle such as an automobile in the event of a collision, and particularly relates to a passenger protecting device having a configuration for restraining the waist of the passenger in a frontal collision so as to prevent forward and backward movement of the body of the passenger.

### [Background Art]

As a system for protecting the passenger in an automobile in a collision, more specifically, as a passenger protecting device for preventing the submarine phenomenon, which is a phenomenon wherein the passenger who wears a seat belt passes under a lap belt in a frontal collision, a passenger protecting device is disclosed in Japanese Unexamined Patent Application Publication No. 10-217818, wherein an inflatable bag is disposed between a seat cushion and a seat pan, and is inflated so as to push up the front portion of the seat cushion in a collision of the vehicle.

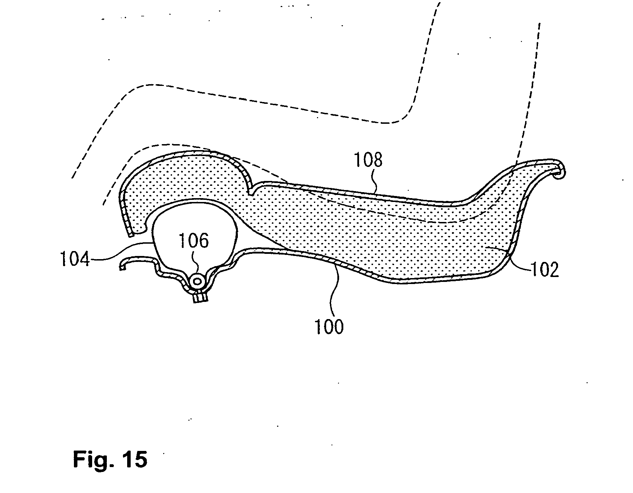

Fig. 15 is a longitudinal cross-sectional view which shows a passenger protecting device along the longitudinal direction of a seat. An airbag 104 is disposed between a cushion frame (seat pan) 100 and a seat pad (seat cushion) 102 at the front portion of the seat. The airbag 104 extends in the width direction of the seat, and can be inflated by actions of an inflater (gas bag) 106. The upper face of the seat pad 102 is covered with a trim cover 108, on which the passenger sits.

In the event that the inflater 106 operates in a collision of the vehicle, the airbag 104 is inflated so as to push up the front portion of the seat pad 102, or so as to reduce the flexibility thereof due to the pressure of the airbag 104 underneath the seat pad 102, thereby preventing forward movement of the body of the passenger, as well as restraining the passenger.

JP 781466 A discloses an airbag system which is disposed in a recess formed on the upper face of a seat pan, the recess being closed by the cover, according to the preamble of claim 1.

JP 2002-79862 A discloses an airbag device which is housed in a front part of a seat cushion.

### [Disclosure of the Invention]

### [Problems to be Solved by the Invention]

The passenger protecting device disclosed in the aforementioned Japanese Unexamined Patent Application Publication No. 10-217818 has a problem that the airbag 104 disposed underneath the seat pad 102 may be damaged due to friction between the airbag 104 and the seat pad 102.

Furthermore, with the passenger protecting device disclosed in the aforementioned Japanese Unexamined Patent Application Publication No. 10-217818, the airbag 104 tends to inflate with maximum inflation around the middle portion thereof in the longitudinal direction, in the shape of a spindle. With such inflation of the airbag 104 in the shape of a spindle, the seat pad 102 is pushed up by strong force around the middle portion in the longitudinal direction thereof, but is not pushed up by strong force around portions on both the left and right sides thereof where the left and right thighs of the passenger are to be positioned, as compared with the middle portion. Accordingly, there is the need to employ an airbag with a great capacity as the airbag 104, sufficient for pushing up the left and right portions of the seat pad 102 by strong force. In addition, there is the need to employ an inflater with a high performance as the inflater 106, corresponding to the airbag 104 with a great capacity.

It is an object thereof to provide a passenger protecting device wherein the entire airbag including the left and right portions thereof is rapidly inflated so as to sufficiently push up the lower face of the entire seat cushion including the left and right portions thereof, without a gas generator with a high performance.

### [Means for Solving the Problems]

According to the present invention, these objects are achieved by a passenger protecting device as defined in claim 1. The dependent claim defines a preferred and advantageous embodiment of the invention.

A passenger protecting device according to the present invention comprises: an inflatable bag disposed underneath the front portion of a seat cushion, for pushing up the lower face of the front portion of the seat cushion; a gas generator for inflating the bag in a case of emergency of a vehicle; and a cover for covering the bag, which opens or expands due to the pressure of the bag at the time of inflation of the bag.

With a passenger protecting device according to an arrangement of the present invention, the bag is disposed within a recess formed on the upper face of a seat pan disposed underneath the seat cushion, and the cover is disposed so as to cover the recess.

With a passenger protecting device according to an arrangement of the present invention, the bag is disposed within a retainer having an open upper face, formed in the shape of a box without a lid, and the cover is disposed so as to cover the retainer.

A passenger protecting device according to the present invention further includes a bag envelope for surrounding the bag at least partway along the longitudinal direction.

### [Advantages]

The passenger protecting device according to the present invention has a configuration wherein the bag is covered with the cover, thereby preventing damage of the bag due to friction between the bag and the seat cushion or the like. Thus, the bag may be formed with reduced durability, thereby reducing costs of the bag having such a configuration. Note that the cover opens or expands due to the pressure of the bag at the time of inflation of the bag. For example, the bag tears, separates from hooks, or deforms, due to inflation of the bag, whereby the inflating bag is released. The cover which expands at the time of inflation of the bag may be formed of an elastic material or a plastic material.

Furthermore, the passenger protecting device according to the present invention has a configuration wherein the bag is disposed within a recess formed on the upper face of the seat pan disposed underneath the cushion, and the cover is disposed so as to cover the recess, and accordingly, lumpiness due to the bag, the gas generator, and the like, disposed underneath the seat cushion, is done away with, thereby providing a comfortable seat.

Furthermore, the passenger protecting device according to the present invention has a configuration wherein the bag and the gas generator are mounted within the retainer, and the cover is disposed so as to cover the retainer, and accordingly, the combination of the bag, the retainer, and the cover, is mounted as a single unit, thereby facilitating mounting operations for mounting the passenger protecting device.

Furthermore, with the passenger protecting device according to the present invention, the bag envelope is included so as to cover at least a part of the bag along the longitudinal direction thereof, thereby preventing the middle portion of the bag along the longitudinal direction thereof from excessively expanding as compared with both ends thereof at the time of inflation of the bag, thereby sufficiently inflating both left and right ends of the bag. As a result, both left and right portions of the seat cushion are sufficiently pushed up from the bag disposed underneath the seat cushion. Furthermore, both left and right sides of the bag can be sufficiently inflated without using a high-performance gas generator, thereby reducing costs and weight of the gas generator.

Furthermore, the bag envelope may be formed so as to surround a middle portion of the bag along the longitudinal direction thereof, or may be formed so as to surround multiple parts along the longitudinal direction thereof. With such a configuration wherein the bag envelope is formed so as to cover a part of the bag along the longitudinal direction thereof, the bag envelope can be formed of a small amount of material.

The passenger protecting device according to the present invention may have a configuration wherein the bag envelope is formed so as to surround the bag over the entire range from a portion around the left end up to a portion around the right end. With such a configuration, the bag can be inflated with generally the same magnitude (e.g., inflation width, or inflation cross-sectional area) over the range from a portion around the left end up to a portion around the right end. Thus, the lower face of the seat cushion is pushed up with generally the same pushing force over the range from the left portion up to the right portion.

With the passenger protecting device according to the present invention, the bag envelope is preferably formed with a smaller surrounding length for surrounding the bag than with the inflated bag. With such a configuration, the maximum surrounding length of the bag is suppressed to the surrounding length of the bag envelope at the time of inflation of the bag, thereby increasing the pressure of the bag. Furthermore, this action effects sufficiently rapid inflation of the bag over the entire range thereof.

The passenger protecting device according to the present invention may have a configuration wherein the bag envelope is connected to the seat pan. With such a configuration, the inflated bag is restrained by the seat pan through the bag envelope. Thus, even in the event that pressing force is applied to the inflating bag in the forward direction from the waist of the passenger moving in the forward direction, forward movement of the bag is prevented or suppressed, thereby further reducing front movement of the body of the passenger.

The passenger protecting device according to the present invention may have a configuration wherein the gas generator disposed within the bag is fixed to the seat pan with a fixing member passing through the bag, and the bag is supported between the gas generator and the seat pan. With such a configuration, the bag is mounted onto the seat pan with an improved mounting strength. Furthermore, the tension applied to the fixing portion on the bag for fixing to the seat pan is reduced at the time of inflation of the bag.

Description will be made below regarding embodiments according to the present invention with reference to the drawings.

### [Brief Description of the Drawings]

Fig. 1 is a perspective view which shows a seat frame including a passenger protecting device according to an embodiment of the present invention.
Fig. 2 is a cross-sectional view taken along line II-II in Fig. 1.
Fig. 3 is a disassembled perspective view which shows a passenger protecting device according to another embodiment of the present invention.
Fig. 4 is a longitudinal cross-sectional view which shows the passenger protecting device shown in Fig. 3.
Fig. 5 is a cross-sectional view taken along line V-V in Fig. 4.
Fig. 6 is an explanatory diagram which shows another configuration for sealing both ends of an envelope cloth.
Fig. 7 is a disassembled perspective view which shows a combination of a bag with a bag envelope and an envelope cloth.
Fig. 8 is a perspective view which shows an arrangement example of an envelope cloth including tear lines.
Fig. 9 is a perspective view which shows another arrangement example of an envelope cloth including tear lines.
Fig. 10 is a perspective view which shows an arrangement example of an envelope cloth including an opening for releasing the inflated bag.
Fig. 11 is an explanatory diagram for describing another arrangement example of an envelope cloth.
Fig. 12 is a disassembled perspective view which shows a passenger protecting device according to another embodiment of the present invention.
Fig. 13 is an explanatory diagram which shows another configuration example of a patching plate.
Fig. 14 is an explanatory diagram which shows another configuration example of a patching plate.
Fig. 15 is a cross-sectional view which shows a conventional passenger protecting device.

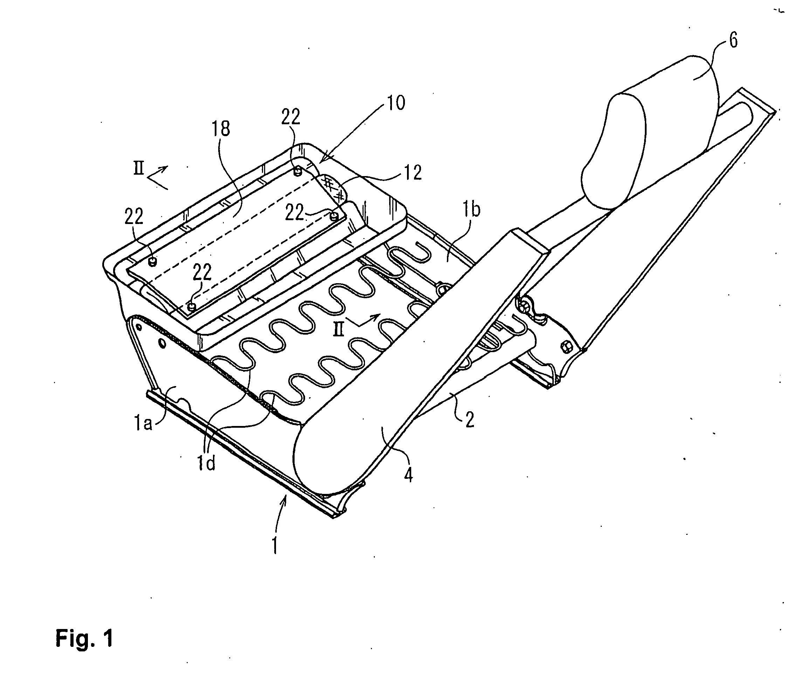

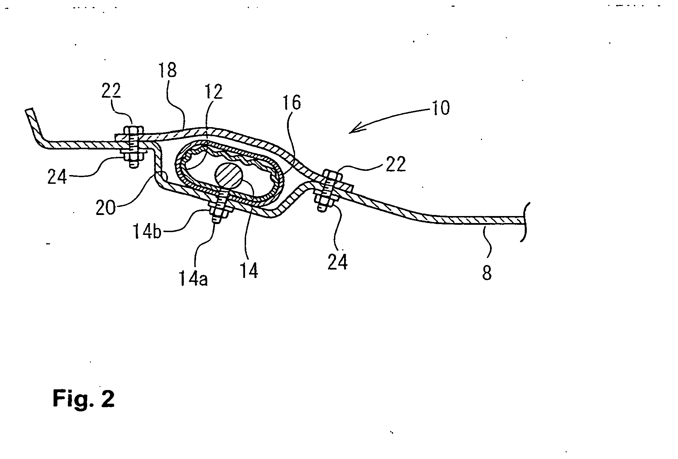

Fig. 1 is a perspective view which shows a seat frame of a seat including a passenger protecting device according to an embodiment of the present invention, and Fig. 2 is a cross-sectional view taken along line II-II in Fig. 1.

The frame forming the seat of an automobile comprises a base frame 1 and a back frame 4 rotatably mounted to the base frame 1 through a support shaft 2 and an unshown reclining device. Furthermore, the back frame 4 includes a headrest 6 on the upper portion thereof. The base frame 1 includes a left and right side frames 1a and 1b, wherein a seat pan 8 is disposed between the front portions of the side frames 1a and 1b.

Furthermore, an unshown seat cushion and an unshown seat bag formed of urethane or the like is mounted on the base frame 1 and the back frame 4. The seat pan 8 is disposed underneath the front portion of the seat cushion. Note that reference numeral 1d in Fig. 1 denotes springs for supporting the seat cushion.

A passenger protecting device 10 comprises an inflatable bag 12 for pushing up the lower face of the front portion of the seat cushion, a gas generator 14 for inflating the bag 12, a bag envelope 16 for surrounding the bag 12, a cover 18 for covering the bag 12, the gas generator 14, and the bag envelope 16, which are disposed on the upper face of the seat pan 8.

With such a configuration, the seat pan 8 includes a recess 20 on the upper face thereof, extending in the width direction of the seat (in the left and right direction thereof), and the bag 12 is folded and stored in the recess 20 along with the bag envelope 16 in normal situations (except for emergency situations such as a collision of the vehicle or the like). Note that the bag 12 is disposed within the recess 20 so as to extend along the width direction thereof.

The bag envelope 16 is formed in the shape of a tube for surrounding the outer face of the bag 12. The bag envelope 16 is formed with a smaller surrounding length than with the bag 12 at the time of free inflation thereof.

Note that the bag envelope 16 may be formed with generally the same length in the width direction thereof (in the longitudinal direction of the bag 12) as with the bag 12, or may be formed with a smaller length thereof. Specifically, the bag envelope 16 is preferably formed with a length in the width direction of 40% to 100% of the length of the bag 12 in the width direction, more preferably with a length in the width direction of 50% to 90% thereof. The bag envelope 16 may be formed of a single envelope, or may be formed of multiple envelopes so as to surround multiple portions along the longitudinal direction. The bag envelope 16 formed of multiple envelopes is preferably formed with the sum of lengths of all the envelopes in the width direction within the aforementioned range.

The bag envelope 16 is preferably formed of a material or with a configuration wherein the bag envelope 16 does not readily stretch, or does not stretch at all, in the circumferential direction thereof. Furthermore, the bag envelope 16 preferably has a moisture-proof (waterproof) configuration. The bag envelope 16 may be formed of a relatively flexible material such as cloth, a synthetic resin sheet, a synthetic resin mesh sheet, or the like, or may be formed of a rigid material such as a metal sheet, metal mesh, or the like.

Furthermore, the passenger protecting device 10 according to the present embodiment has a configuration wherein the cylindrical gas generator 14 is disposed within the bag 12. The gas generator 14 is disposed such that the longitudinal direction thereof matches the width direction of the vehicle. The gas generator 14 includes gas nozzles (not shown) on the circumferential face thereof for discharging gas radially in all directions.

The gas generator 14 includes a stud bolt 14a protruding therefrom. Specifically, the stud bolt 14a passes through the lower faces of the bag 12 and the bag envelope 16, and the bottom of the recess 20, and protrudes downward from the seat pan 8. The stud bolt 14a is secured to the seat pan 8 with a nut 14b. Thus, the gas generator 14, the bag 12, and the bag envelope 16, are secured to the seat pan 8.

Note that the passenger protecting device 10 according to the present embodiment has a configuration wherein multiple stud bolts 14a are provided to the gas generator 14 in the longitudinal direction thereof at predetermined intervals for securing the gas generator 14, the bag 12, and the bag envelope 16, to the seat pan 8.

Furthermore, the cover 18 is mounted for covering the bag 12, the bag envelope 16, and the gas generator 14, disposed within the recess 20. The cover 18 is formed in the shape of a plate with a size sufficient for covering the entire area of the recess 20, and is secured to the seat pan 8 through a pair of the flanges facing upward on the front and rear sides of the vehicle by bolts 22 and nuts 24.

The cover 18 has a configuration wherein upon inflation of the bag 12, one of three actions is performed, i.e., 1) the cover 18 deforms so as to inflate upward following inflation of the bag 12, 2) the cover 18 tears due to the pressure from inflation of the bag 12 so as to allow further inflation of the bag 12, 3) the bolts 22 separate from the cover 18 due to inflation of the bag 12 so that the cover 18 is pushed up.

With the passenger protecting device 10 having such a configuration, upon detection of a frontal collision of the automobile, the gas generator 14 operates so as to discharge gas, and accordingly, the bag 12 inflates upward due to gas discharged from the gas generator 14 so as to push up or push away the cover 18. As a result, the front portion of the seat cushion is pushed up, or is pressed upward so as to reduce the flexibility thereof, thereby preventing or suppressing forward movement of the waist of the passenger.

With such a configuration, the bag envelope 16 is secured to the seat pan 8, and accordingly, the inflated bag 12 is restrained by the seat pan 8 through the bag envelope 16. This action prevents or suppresses the forward movement of the bag 12 at the time of the inflated bag 12 being affected by the forward pressing force from the waist of the passenger moving in the forward direction of the vehicle, thereby reducing forward movement of the body of the passenger.

Note that with such a configuration, the bag envelope 16 encompasses the entire bag 12 including portions around both left and right ends thereof, and accordingly, the bag 12 inflates with generally the same inflation (the same inflation width or inflation cross-sectional area) over the entire range including portions around both left and right ends. Thus, the lower face of the seat cushion is pushed up with generally the same pressing force over the entire range including the left and right sides thereof.

Furthermore, the bag envelope 16 is formed with a smaller surrounding length than with the bag 12 at the time of free inflation thereof, and accordingly, with such a configuration according to the present embodiment wherein the bag 12 is inflated while being encompassed by the bag envelope 16, the maximum size (maximum diameter) thereof is suppressed to the size corresponding to the surrounding length of the bag envelope 16, thereby increasing the pressure of the bag 12. Thus, the bag 12 is rapidly inflated over the entire range.

The passenger protecting device 10 has a configuration wherein the bag 12, the bag envelope 16, and the gas generator 14, are mounted within the recess 20 formed on the upper face of the seat pan 8, and are covered with the cover 18, thereby preventing damage thereof due to friction between these components and the seat cushion, or the like. Furthermore, the cover 18 does away with lumpiness of the seat cushion due to the bag 12, the bag envelope 16, the gas generator 14, the recess 20, and the like, thereby providing a comfortable seat cushion.

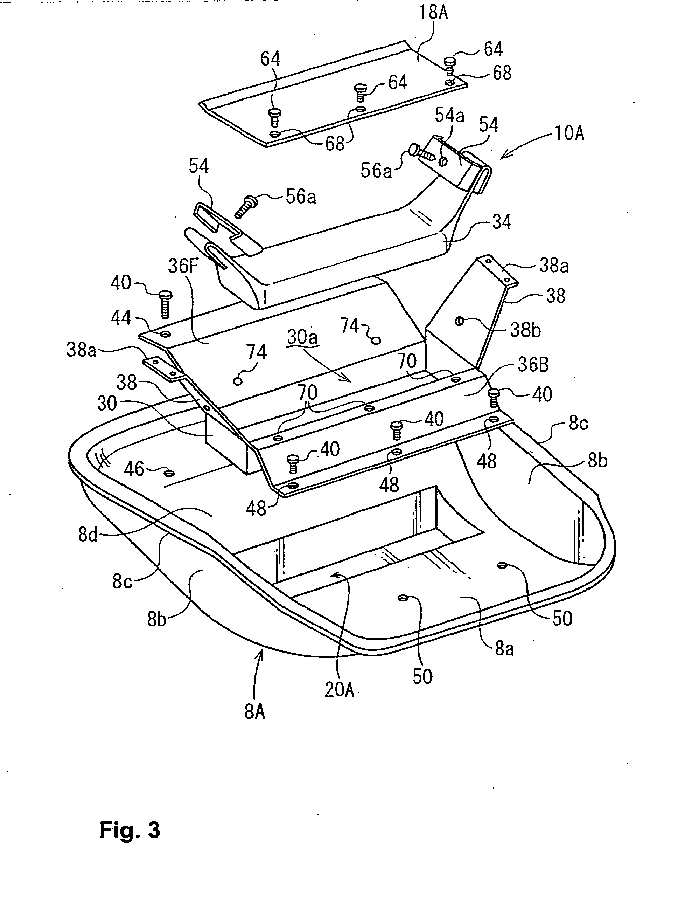

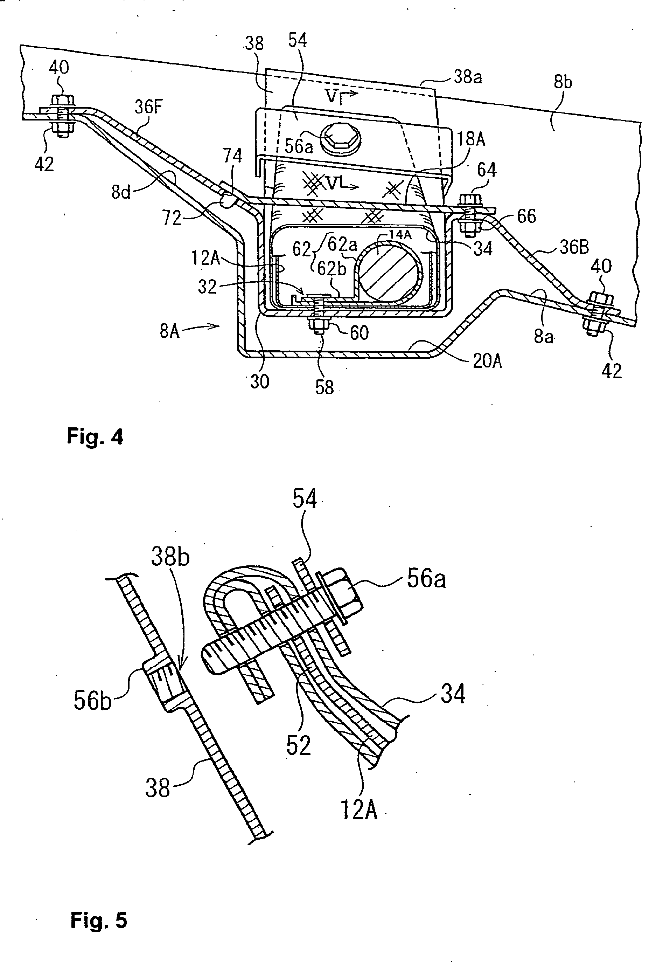

Fig. 3 is a disassembled perspective view which shows a passenger protecting device according to another embodiment of the present invention, Fig. 4 is a longitudinal cross-sectional view of the passenger protecting device, and Fig. 5 is a cross-sectional view taken along line V-V in Fig. 4.

A passenger protecting device 10A according to the present embodiment includes a box-shaped retainer 30 without a lid disposed on the seat pan 8A, a bag 12A folded and disposed within the retainer 30, a gas generator 14A for inflating the bag 12A, a fixing member 32 for connecting and fixing the bag 12A and the gas generator 14A to the retainer 30 with stud bolts 58 described later, an envelope cloth 34 for wrapping the folded bag 12A so as to restrain the folded bag 12A, and a cover 18A mounted on the retainer 30 so as to cover an opening 30a on the upper face of the retainer 30.

The seat pan 8A includes a bottom 8a disposed along the lower face of the seat cushion (not shown), and a pair of side walls 8b and 8b erected from the left and right perimeters of the bottom 8a. The side walls 8b include flange portions 8c on the upper ends thereof, protruding in the horizontal direction. The bottom 8a is formed in the form of a curve over the region from the middle portion to the rear portion thereof in the moving direction of the vehicle. That is to say, the bottom 8a includes a recess 20A on the upper face thereof for mounting the retainer 30. Note that the front perimeter of the recess 20A extends so as to form a slanted face 8d with a uphill inclination toward the forward direction.

The retainer 30 is formed in the shape of a box without a lid having an opened upper face, and specifically, generally in the shape of a rectangular parallelepiped with a greater length in the width direction. The bag 12A is disposed within the retainer 30 so as to extend along the width direction. The front and rear perimeters along the opening 30a formed on the upper face of the retainer 30 protrudes so as to form a front supporting member 36F and a rear supporting member 36B for supporting the retainer 30 by being secured to the bottom 8a of the seat pan 8A. Furthermore, the left and right perimeters along the opening 30a thereof protrudes so as to form side-wall supporting members 38 and 38 for supporting the retainer 30 by being secured to the left and right side walls 8b and 8b of the seat pan 8A.

The front supporting member 36F extends from the front edge along the opening 30a formed on the upper face of the retainer 30 forward with a predetermined uphill inclination along the slanted face 8b formed of the front perimeter of the recess 20A, and the tip thereof is fixed to the bottom 8a of the seat pan 8 around the peak of the slanted face 8d with bolts 40 and nuts 42. Note that reference numeral 44 in Fig. 3 denotes a bolt inserting hole provided on the tip of the front supporting member 36F, and reference numeral 46 denotes a bolt inserting hole formed on the bottom 8a corresponding to the bolt inserting hole 44.

The rear supporting member 36B extends backward from the rear edge of the opening 30a formed on the upper face of the retainer 30 with a downhill inclination, and the tip thereof is secured to the bottom 8a of the seat pan 8 on the rear edge of the recess 20A with the bolts 40 and the nuts 42. Note that reference numeral 48 in Fig. 3 denotes a bolt inserting hole provided on the tip of the rear supporting member 36B, and reference numeral 50 denotes a bolt inserting hole formed on the bottom 8a corresponding to the bolt inserting hole 48.

The side-wall supporting members 38 extend upward from the left and right edges of the opening 30a formed on the upper face of the retainer 30 along the side walls 8b of the seat pan 8A. The tips of the side-wall supporting members 38 protrude in the horizontal direction so as to form flange portions 38a which are disposed on the flange portions 8c formed on the upper ends of the side walls 8b and secured thereto with bolts (not shown).

The envelope cloth 34 is formed in the shape of a tube with openings on both ends for mounting the bag 12A therewithin. Note that the envelope cloth 34 has a configuration wherein upon inflation of the bag 12A, the cloth 34 tears or expands following inflation of the bag 12A so as to allow further inflation of the bag 12A.

With such a configuration, the left and right ends of the bag 12A and the envelope cloth 34 are connected to the side-wall supporting members 38 of the retainer 30. As shown in Fig. 5, the bag 12A includes connection members 52 on both left and right ends thereof for connecting the bag 12A to the side-wall supporting members 38. As shown in the drawing, each connecting member 52 includes a bolt inserting hole (reference numeral is omitted).

With such a configuration, the envelope cloth 34 is formed with a greater length between both ends in the longitudinal direction than the distance between the connecting members 52 and 52 disposed on both ends of the bag 12A. As shown in Fig. 5, each of both ends of the envelope cloth 34 match the corresponding end of the bag 12A, and are folded back onto the reverse face (facing the side-wall supporting member 38) of the corresponding connecting member 52. As shown in the drawing, the envelope cloth 34 includes bolt inserting holes (reference numeral is omitted) at positions corresponding to the bolt inserting holes of the connecting members 52 such that each bolt inserting hole formed on the envelope cloth 34 matches the corresponding bolt inserting hole formed on the connecting member 52 at the time of folding back both ends of the envelope cloth 34 to the reverse faces of the connecting members 52.

Furthermore, a patching plate 54 is disposed on the front face of each connecting member 52 (which is opposite to the face onto which the end of the envelope cloth 34 is folded back) with the envelope cloth 34 introduced therebetween. Each patching plate 54 includes a bolt inserting hole 54a (Fig. 3) at a position corresponding to the bolt inserting hole formed on the connecting member 52. With such a configuration, the patching plate 54 is formed in the shape of a "U" so as to surround the front face and both left and right sides of the side-wall supporting member 38.

Note that each side-wall supporting member 38 includes a bolt inserting hole 38b (Fig. 3) at a position corresponding to the bolt inserting hole of the connecting member 52.

A bolt 56a is inserted into each combination formed of the bolt inserting holes of the patching plate 54, the envelope cloth 34, the connecting member 52, and the side-wall supporting member 38, and is screwed to a nut 56b (Fig. 5), whereby both ends of the bag 12A and the envelope cloth 34 are connected to the side-wall supporting members 38. Note that while description has been made regarding an arrangement wherein each nuts 56b is secured to the reverse face of the side-wall supporting member 38 by welding or the like as shown in Fig. 5, an arrangement according to the present invention is not restricted to the aforementioned arrangement.

Both ends of the envelope cloth 34 are folded down in two, and are supported and pressed between the patching plates 54 and the side-wall supporting members 38 by the aforementioned bolting. Thus, both ends of the envelope cloth 34 are sealed.

With such a configuration, the bag 12A includes the rod-shaped gas generator 14A therewithin, connected to the fixing member 32. The fixing member 32 is formed in the shape of a plate, is disposed so as to extend along the bottom of the retainer 30, and is disposed on the inner face of the lower portion of the bag 12A so as to press the lower portion of the bag 12A to the bottom of the retainer 30. A stud bolt 58 protrudes from the lower face of the fixing member 32. As shown in Fig. 4, the stud bolt 58 is inserted into bolt inserting holes (reference numerals are omitted) formed on the lower portions of the bag 12A and the envelope cloth 34, and on the bottom of the retainer 30, so as to protrude from the lower face of the retainer 30. A nut 60 is screwed to the stud bolt 58, whereby the lower portions of the bag 12A and the envelope cloth 34 are supported and pressed between the fixing member 32 and the bottom of the retainer 30, as well as fixing the fixing member 32 to the retainer 30.

The gas generator 14A is disposed on the upper face of the fixing member 32 such that the longitudinal direction thereof matches the width direction, and is fixed to the fixing member 32 with a bracket 62. With such a configuration, the bracket 62 is disposed so as to protrude from the rear edge of the fixing member 32, and is formed of a C-shaped band portion 62a formed in the shape of a "C" protruding from the upper faces of the fixing member 32, and a flange portion 62b extending from the tip of the C-shaped band portion 62a along the upper faces of the fixing member 32. The aforementioned stud bolt 58 is inserted so as to protrude downward from the flange portion 62b, and passes through the fixing member 32 so as to protrude downward from the fixing member 32. The gas generator 14A is inserted into a space surrounded by the C-shaped band portion 62a, following which the nut 60 is screwed to the stud bolt 58, whereby the flange portion 62b is pressed and fixed to the fixing member 32, thereby fixing the gas generator 14A to the fixing member 32.

The cover 18A is formed generally in the shape of a rectangle with an area generally sufficient for covering the entire opening 30a formed on the upper face of the retainer 30. The cover 18A is disposed such that the front edge thereof matches the upper face of the front supporting member 36F, and the rear edge thereof matches the upper face of the rear supporting member 36B. As shown in Fig. 4, the rear edge of the cover 18A is fixed to the rear supporting member 36B with bolts 64 and nuts 66. In Fig. 3, reference numeral 68 denotes a hole formed on the rear end of the cover 18A for inserting the bolt 64, and reference numeral 70 denotes a bolt inserting hole formed on the rear supporting member 36B corresponding to the bolt inserting hole 68.

As shown in Fig. 4, the cover 18A includes snap pins 72 on the lower face of the front edge thereof, protruding therefrom. The snap pins 72 are elastically engaged to the pin engaging openings 74 formed on the front supporting member 36F, whereby the front edge of the cover 18A is secured to the front supporting member 36F. Upon inflation of the bag 12A, the snap pins 72 is disengaged from the pin engaging openings 74, and the cover 18A is opened upward in the shape of a flap with the rear edge thereof as a fulcrum.

With the passenger protecting device 10A having such a configuration, upon detection of a frontal collision of the automobile, the gas generator 14A operates so as to discharge gas, thereby inflating the bag 12A due to gas discharged from the gas generator 14A. In this case, the envelope cloth 34 is pressed in the expanding direction by actions of the bag 12A, and tears or expands following inflation thereof so as to allow further inflation of the bag 12A. The inflating airbag 12A further inflates upward while pressing and opening the cover 18A so as to push up the front portion of the seat cushion, or so as to reduce the flexibility thereof due to pressure of the bag 12A disposed underneath the front portion of the seat cushion, thereby preventing or suppressing front movement of the waist of the passenger.

With the configuration according to the present embodiment, the front supporting member 36F is disposed so as to extend forward from the front edge of the opening 30a formed on the upper face of the retainer 30 with a uphill inclination along the slanted face 8d formed on the front edge of the recess 20A of the seat pan 8A, extending forward with a uphill inclination. Upon inflation of the bag 12A, the bag 12A inflating forward comes into contact with the front supporting member 36F. Thus, even in the event that extremely strong pressing force is applied to the inflating bag 12A in the forward direction from the waist of the passenger, the front supporting member 36F receives the bag 12A, thereby preventing forward movement of the bag 12A.

The passenger protecting device 10A has a configuration wherein the bag 12A, the gas generator 14A, the fixing member 32, the envelope cloth 34, and the like, disposed within the retainer 30, are covered with the cover 18A, thereby preventing damage thereof due to friction between the seat cushion and these components. Furthermore, this configuration does away with lumpiness of on the seat cushion due to these components, thereby providing a comfortable seat cushion.

Description will be made regarding a procedure for mounting the passenger protecting device 10A onto the seat pan 8A.

First, the gas generator 14A is inserted into a space surrounded by the C-shaped band portion 62a of the fixing member 32, and the stud bolt 58 is inserted into the bolt inserting hole formed on the lower portion of the bag 12A so as to protrude outward therefrom, as well as disposing the fixing member 32 within the bag 12A. Subsequently, the bag 12A is folded into a long and slender form, following which the envelope cloth 34 is mounted onto the folded body formed of the bag 12A. The stud bolt 58 is inserted into the bolt inserting hole formed on the lower portion of the envelope cloth 34, as well, so as to protrude therefrom.

Next, the folded body formed of the bag 12A surrounded by the envelope cloth 34 is disposed within the retainer 30. In this case, the stud bolt 58 protruding from the lower portion of the envelope cloth 34 is inserted into the bolt inserting hole formed on the bottom of the retainer 30. Subsequently, the nut 60 is screwed to the stud bolt 58 from the lower side of the retainer 30, whereby the fixing member 32 is fixed to the retainer 30. Furthermore, both ends of the envelope cloth 34 are folded back onto the reverse face of the connecting members 52 disposed at both ends of the bag 12A, and the folded ends of the envelope cloth 34 and the connecting members 52 are secured to the corresponding side-wall supporting members 38 with the bolts 56a through the patching plates 54.

Subsequently, the cover 18A is mounted onto the retainer 30. Subsequently, the retainer 30 is mounted onto the seat pan 8A.

As described above, with the mounting sequence according to the present embodiment, the bag 12A, the envelope cloth 34, the gas generator 14A, the fixing member 32, and the cover 18A, are mounted onto the retainer 30 beforehand, thereby efficiently performing mounting operations for mounting the passenger protecting device 10A onto the seat pan 8A.

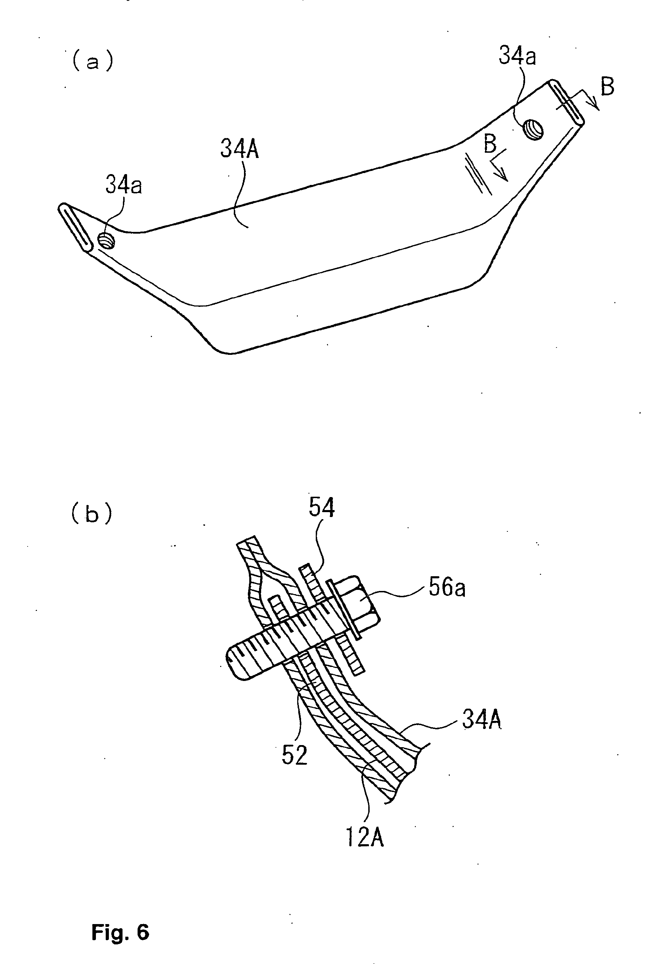

While description has been made regarding an arrangement as shown in Fig. 3 through Fig. 5 wherein both ends of the envelope cloth 34 are folded back onto the reverse face of the connecting members 52, and each end of the envelope cloth 34 folded down in two is pressed between the patching plate 54 and the side-wall supporting member 38 so as to seal each end of the envelope cloth 34, the method for sealing both ends of the envelope cloth according to the present invention is not restricted to the aforementioned arrangement. Fig. 6(a) is a perspective view which shows another configuration for sealing both ends of the envelope cloth, wherein Fig. 6(b) is a cross-sectional view taken along line B-B in Fig. 6(a). In Fig. 6, the same reference numerals denote the same components as in Fig. 3 through Fig. 5.

An envelope cloth 34A shown in Fig. 6 is formed in the shape of a tube as with the envelope cloth 34 shown in Fig. 3 through Fig. 5 described above, and the bag 12A is inserted into either of the openings formed on both ends thereof so as to be stored therewithin. The envelope cloth 34A has a configuration wherein the openings of both ends thereof are closed such that the perimeter parts on each opening facing one another are in contact with each other, following which these perimeter parts are connected one to another with connecting means such as seaming, welding, or the like, thereby sealing the envelope cloth 34A. Note that reference numeral 34a in Fig. 6(a) denotes holes for inserting bolts 56a, formed on both ends of the envelope cloth 34A so as to match the bolt inserting holes formed on the connecting members 52 disposed on the bag 12A.

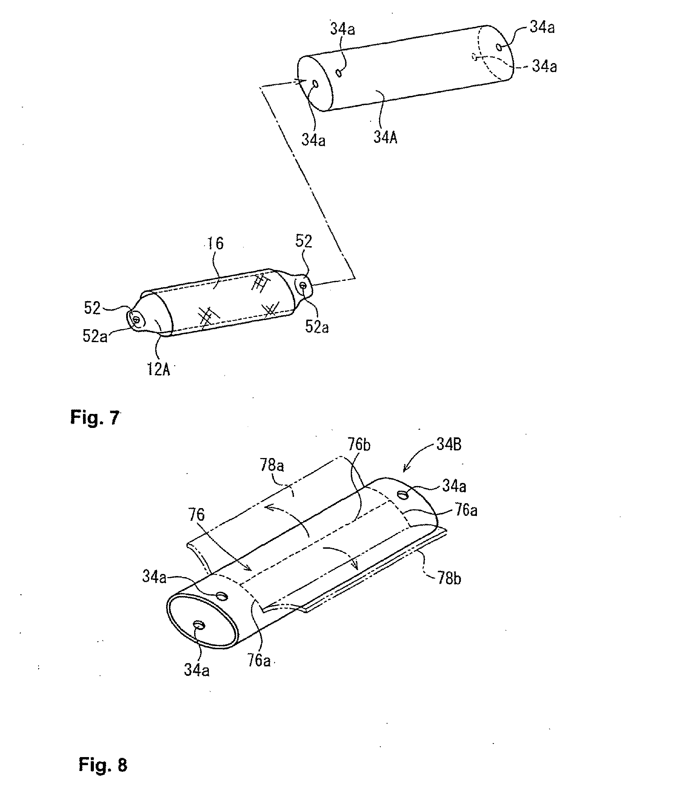

While description has been made regarding an arrangement without any bag envelope as shown in Fig. 3 through Fig. 5, and Fig. 6, described above, an arrangement including a bag envelope may be made. In this case, as shown in Fig. 7, the bag envelope 16 is mounted onto the bag 12A beforehand, following which the bag 12A with the bag envelope 16 is disposed within the envelope cloth 34A. Note that reference numeral 52a in Fig. 7 denotes bolt inserting holes formed on the connecting members 52 disposed on both ends of the bag 12A.

While description has been made regarding an arrangement as shown in Fig. 7, including the envelope cloth 34A shown in Fig. 6, an arrangement may be made, including the envelope cloth 34 shown in Fig. 5 through Fig. 7.

The material of the envelope cloth according to the present invention is not restricted in particular, rather, the envelope cloth may be formed of various kinds of materials such as cloth like the bag or the bag envelope, or with synthetic resin, metal, or the like, for example.

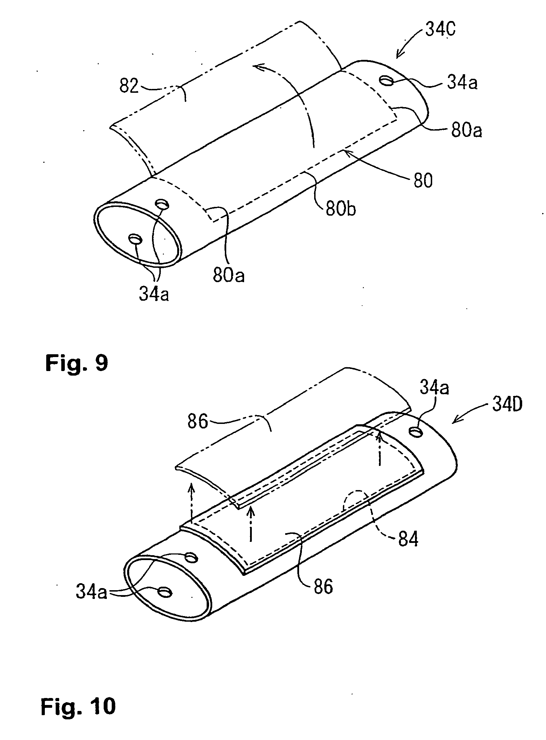

While description has been made regarding an arrangement with an unshown mechanism of the envelope cloth for allowing inflation of the bag at the time of inflation of the bag as shown in Fig. 3 through Fig. 5, and Fig. 6, the mechanism is not restricted in particular. For example, an arrangement may be made wherein the envelope cloth includes tear lines (lines along which the envelope cloth is to tear) formed of perforations, grooves, or the like, and upon inflation of the bag, the envelope cloth tears along the tear lines so as to allow inflation of the bag. Furthermore, an arrangement may be made wherein the envelope cloth includes an opening beforehand so as to allow inflation of the bag, and the opening is closed with a closing member in normal situations. Fig. 8 and Fig. 9 are perspective views which show envelope clothes 34B and 34C, respectively, including such tear lines, and Fig. 10 is a perspective view which shows an envelope cloth 34D including an opening for allowing inflation of the bag.

The envelope cloth 34B shown in Fig. 8 includes an H-shaped tear line 76 formed of a pair of side tear lines 76a and 76a on both left and right ends on the upper face thereof, extending along the circumferential direction thereof, and a center tear line 76b, both ends of which are connected to the middle portions of the side tear lines 76a, extending around the middle portion of the upper face thereof in the longitudinal direction.

With the envelope cloth 34B, upon inflation of the bag (not shown) therewithin, the upper face of the envelope cloth 34B tears in the shape of an "H" along the tear lines 76a, 76a, and 76b, so that the upper face is opened. In Fig. 8, reference numerals 78a and 78b denote two flaps formed due to tearing of the upper face of the envelope cloth 34B, which are shown by two-dot broken lines. The flaps 78a and 78b are opened upward following inflation of the bag.

The envelope cloth 34C shown in Fig. 9 includes a C-shaped tear line 80 formed of a pair of side tear lines 80a and 80a on both left and right ends on the upper face thereof, extending along the circumferential direction thereof, and a longitudinal tear line 80b both ends of which are connected to the rear ends of the side tear lines 80a, extending along the rear end of the upper face thereof in the longitudinal direction.

With the envelope cloth 34C, upon inflation of the bag (not shown) therewithin, the upper face of the envelope cloth 34C tears in the shape of a "C" along the tear lines 80a, 80a, and 80b, so that the upper face is opened. In Fig. 9, reference numeral 82 denotes a flap formed due to tearing of the upper face of the envelope cloth 34C, which is shown by two-dot broken lines. The flap 82 is opened upward following inflation of the bag.

The envelope cloth 34D shown in Fig. 10 includes an opening 84 on the upper face thereof beforehand for allowing inflation of the bag at the time of inflation of the bag (not shown) therewithin. The opening 84 is closed with a closing sheet 86 in normal situations.

With the envelope cloth 34D having such a configuration, upon inflation of the bag therewithin, the closing sheet 86 separates from the upper face of the envelope cloth 34D due to inflation pressure of the bag, thereby releasing the opening 84. This mechanism allows the bag to inflate upward through the opening 84.

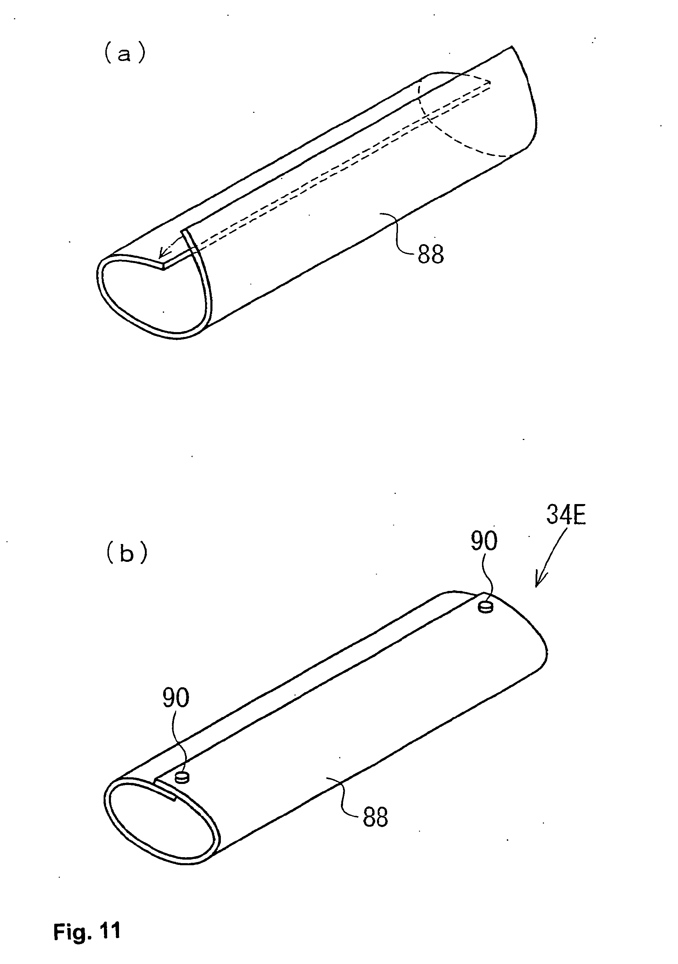

While description has been made regarding an arrangement in the aforementioned embodiments wherein the envelope cloth is formed in the shape of a tube beforehand, the envelope cloth according to the present invention is not restricted to the aforementioned arrangements. For example, a flat sheet member may be wrapped around in the form of a tube so as to form an envelope cloth. Fig. 11 is an explanatory diagram which shows an envelope cloth 34E having such a configuration, wherein (a) shows a sheet member at the time of wrapping, and (b) shows the sheet member with wrapping completed.

The envelope cloth 34E is formed of a sheet member 88 formed of cloth, synthetic resin, metal, or the like, and is rolled, following which a pair of edges are engaged one to another with hooks 90, whereby wrapping thereof is completed. With the envelope cloth 34E having such a configuration, upon inflation of the bag (not shown) therewithin, the hooks 90 are disengaged due to inflation pressure of the bag, whereby the pair of the edges of the sheet member 88 are disengaged so as to open both sides thereof.

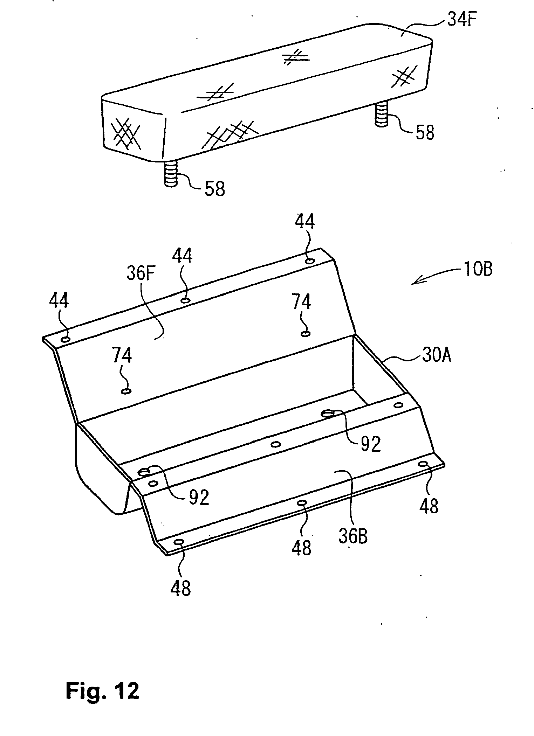

Note that the present invention is not restricted to an arrangement wherein the both ends of the bag is connected to the retainer or the sheet pan. Fig. 12 is a disassembled perspective view which shows a passenger protecting device 10B having such a configuration. Note that in Fig. 12, the same components are denoted by the same reference numerals as in Fig. 3 through Fig. 5.

The passenger protecting device 10B has a configuration wherein the bag (not shown) does not include any connecting members on both ends thereof. Furthermore, an envelope cloth 34F for wrapping the folded body of the bag does not include any bolt inserting holes on both ends thereof. In such a configuration, the envelope cloth 34F is formed in the shape of a bag for wrapping the entire folded body of the bag. The retainer 30A for storing the bag and the envelope cloth 34F has generally the same configuration as with the retainer 30 without side-wall supporting members 38 and 38 disposed on both left and right sides thereof shown in Fig. 3 through Fig. 5.

The passenger protecting device 10B has a configuration wherein the bag and the envelope cloth 34F are fixed within the retainer 30A by the stud bolt 58 protruding from the lower face of the fixing member (not shown) disposed within the bag.

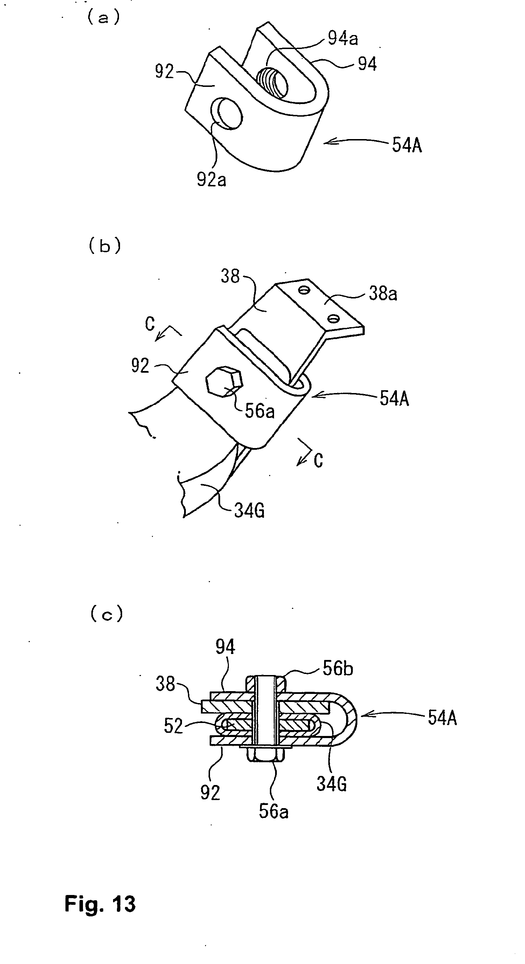

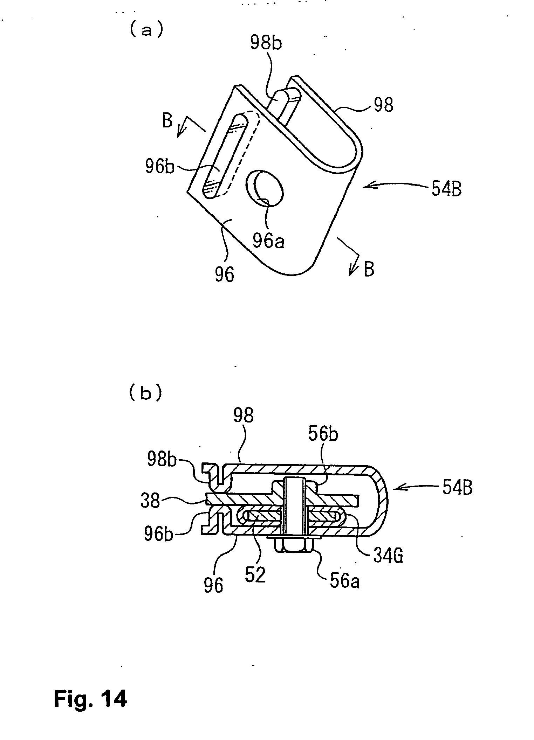

Furthermore, the configuration of the patching plate according to the present invention, used for connecting both ends of the bag to the side-wall supporting members of the retainer, is not restricted to the arrangements shown in Fig. 3 through Fig. 5 described above. Fig. 13(a) is a perspective view which shows a patching plate 54A according to another embodiment, Fig. 13(b) is a perspective view which shows the patching plate 54A mounted on the side-wall supporting member, and Fig. 13(c) is a cross-sectional view taken along line C-C in Fig. 13(b). On the other hand, Fig. 14(a) is a perspective view which shows a patching plate 54B according to yet another embodiment, Fig. 14(b) is a cross-sectional view which shows the patching plate 54B mounted to the side-wall supporting member taken along line B-B in Fig. 14(a), which corresponds to Fig. 13(c).

The patching plate 54A shown in Fig. 13 is formed generally in the shape of a "U" for surrounding the side-wall supporting member 38 over the front face thereof (the face for mounting the connecting member 52 disposed at the end of the bag), one of the sides thereof, and the rear face opposite to the front face. Note that in Fig. 13(b) and (c), reference numeral 34G denotes an envelope cloth for wrapping the bag and the connecting members 52 disposed on both ends thereof.

The patching plate 54A includes bolt inserting holes 92a and 94a at positions on a front-face portion 92 thereof for being mounted facing the front face of the side-wall supporting member 38, and a rear-face portion 94 for being mounted facing the rear face of the side-wall supporting member 38, corresponding to the hole (reference numeral is omitted in Fig. 13) formed on the side-wall supporting member 38 for inserting the bolt 56a. Furthermore, the nut 56b is disposed on the outer face of the rear-face portion 94 (which is opposite to the face facing the side-wall supporting member 38), wherein the bolt 56a which has passed through the bolt inserting hole 94a is screwed to the nut 56b. Note that the nut 56b is secured to the rear-face portion 94 by welding or the like.

Both ends of the bag are connected to the side-wall supporting members 38 using the patching plates 54A as follows. First, each connecting member 52 disposed at the end of the bag is positioned on the front face of the side-wall supporting member 38, following which the patching plate 54A is mounted onto the side-wall portion 38 so as to surround the connecting member 52 and the side-wall supporting member 38 between the front-face portion 92 and the rear-face portion 94. Subsequently, the bolt 56a is inserted from the front face of the side-wall supporting member 38 into the bolt inserting holes formed on the front-face portion 92, the envelope cloth 34G, the connecting member 52, the side-wall supporting member 38, and the rear-face portion 94, following which the bolt 56a is screwed to the nut 56b. Thus, the connecting member 52 and the side-wall supporting member 38 are pressed between the front-face portion 92 and the rear-face portion 94, thereby fixing the connecting member 52 to the side-wall supporting member 38.

Note that the passenger protecting device according to the present embodiment has the same configuration as shown in Fig. 3 through Fig. 5 described above, except for the above-described configuration for connecting both ends of the bag to the side-wall supporting members using the patching plates 54A, and the same components in Fig. 13 are denoted by the same reference numerals as in Fig. 3 through Fig. 5.

The patching plate 54B shown in Fig. 14 is formed in the shape of a "U" in the same way as with the aforementioned patching plate 54A described above, is formed of a front-face portion 96 for being mounted facing the front face of the side-wall supporting member 38, and a rear-face portion 98 for being mounted facing the rear face of the side-wall supporting member 38, and is mounted onto the side-wall supporting member 38 so as to surround the connecting member 52 of the end of the bag and the side-wall supporting member 38 between the front-face portion 96 and the rear-face portion 98. With the present embodiment, the bag and the connecting members 52 disposed on both ends thereof are wrapped by the envelope cloth 34G, as well.

The patching plate 54B includes a bolt inserting hole 96a at a position on only the front-face portion 96, corresponding to the hole (reference numeral thereof is omitted in Fig. 14) formed on the side-wall supporting member 38 for inserting the bolt 56a. The nut 56 is disposed on the rear face of the side-wall supporting member 38 (which is to be positioned between the side-wall supporting member 38 and the rear-face portion 98 of the patching plate 54), wherein the bolt 56a is screwed to the nut 56. The nut 56b is fixed to the side-wall supporting member 38 by welding or the like.

The patching plate 54B according to the present embodiment includes protrusions 96b and 98b protruding from the inner faces of the front-face portion 96 and the rear-face portion 98, respectively (these inner faces are positioned facing one to another). The protrusions 96b and 98b protrude around the tips of the front-face portion 96 and the rear-face portion 98, respectively, facing one to another, as shown in Fig. 14(b).

As shown in Fig. 14(b), the protrusion 96b is formed with a height protruding from the inner face of the front-face portion 96 generally the same as the total thickness of the connecting member 52 and the envelope cloth 34G which wraps the connecting member 52. On the other hand, the protrusion 98b is formed with a greater height protruding from the inner face of the rear-face portion 98 than the height of the nut 65b protruding from the rear face of the side-wall supporting member 38. Note that the gap between the protrusions 96b and 98b formed on the tips thereof is generally the same as the thickness of the side-wall supporting member 38, or is somewhat smaller than the thickness thereof.

Both ends of the bag are connected to the side-wall supporting members 38 using the patching plates 56B as follows. First, each connecting member 52 disposed on the end of the bag is positioned on the front face of the side-wall supporting member 38, following which the patching plate 54B is mounted onto the side-wall supporting member 38 such that the connecting member 52 and the side-wall supporting member 38 are supported between the front-face portion 96 and the rear-face portion 98. In this case, the side-wall supporting member 38 is supported between the protrusions 96b and 98b protruding from the inner faces of the front-face portion 96 and the rear-face portion 98, respectively, whereby the patching plate 54B is temporarily fixed to the side-wall supporting member 38. Subsequently, the bolt 56a is inserted from the front face of the side-wall supporting member 38 into the bolt inserting holes formed on the front-face portion 96, the envelope cloth 34G, the connecting member 52, and the side-wall supporting member 38, following which the bolt 56a is screwed to the nut 56b disposed on the rear face of the side-wall supporting member 38. Thus, the connecting member 52 is supported and pressed between the front-face portion 96 and the side-wall supporting member 38, whereby the connecting member 52 is secured to the side-wall supporting member 38.

The passenger protecting device according to the present embodiment has the same configuration as in Fig. 3 through Fig. 5 described above, except for the above-described configuration for connecting the both ends of the bag to the side-wall supporting portions using the patching plates 54B, and the same components shown in Fig. 14 are denoted by the same reference numerals as in Fig. 3 through Fig. 5.

Note that each of the above-described embodiments is only an example of the present invention, and the present invention is not restricted to any one of the above-described embodiments.

## Claims

1. A passenger protecting device comprising:
an inflatable bag (12; 12A) disposed underneath a front portion of a seat cushion, for pushing up the lower face of the front portion of said seat cushion;
a gas generator (14; 14A) for inflating said bag (12; 12A) in a case of emergency of a vehicle; and
a cover (18; 18A) for covering said bag (12; 12A), which opens or expands due to the pressure of said bag (12; 12A) at the time of inflation of said bag (12; 12A),
wherein said bag (12; 12A) is disposed within a recess (20; 20A) formed on the upper face of a seat pan (8; 8A) disposed underneath said seat cushion,
and wherein said cover (18; 18A) is disposed so as to cover said recess (20; 20A),
**characterized by** further including a bag envelope (16, 34) for surrounding said bag (12; 12A) at least partway along the longitudinal direction.

2. A passenger protecting device according to Claim 1, wherein said bag (12A) is disposed within a retainer (30) formed in the shape of a box,
and wherein said cover (18A) is disposed so as to cover said retainer (30).

## Patentansprüche

1. Insassenschutzvorrichtung, die aufweist:
einen aufblasbaren Beutel (12; 12A), der unterhalb eines vorderen Bereichs eines Sitzkissens angeordnet ist, um die untere Seite des vorderen Teils des Sitzkissens nach oben zu drücken;
einen Gasgenerator (14; 14A) um im Fall eines Notfalls eines Fahrzeugs den Beutel (12; 12A) aufzublasen, und
eine Abdeckung (18; 18A), um den Beutel (12; 12A) abzudecken, die sich aufgrund des Drucks des Beutels (12; 12A) zum Zeitpunkt des Aufblasens des Beutels (12; 12A) öffnet oder ausdehnt,
wobei der Beutel (12; 12A) in einer Einbuchtung (20; 20A) angeordnet ist, die auf der Oberseite einer Sitzschale (8; 8A) ausgebildet ist, die unterhalb des Sitzkissens angeordnet ist,
und wobei die Abdeckung (18; 18A) so angeordnet ist, dass die Einbuchtung (20; 20A) abgedeckt wird,
**dadurch gekennzeichnet, dass** überdies eine Beutelhülle (16, 34) vorgesehen ist, um den Beutel (12; 12A) zumindest teilweise entlang der Längsrichtung zu umschließen.

2. Eine Insassenschutzvorrichtung nach Anspruch 1, wobei der Beutel (12A) in einer Halterung (30) angeordnet ist, die die Form eines Kastens besitzt,
und wobei die Abdeckung (18A) so angeordnet ist, dass sie die Halterung (30) abdeckt.

## Revendications

1. Dispositif de protection de passager comprenant :
- un coussin de sécurité gonflable (12 ; 12A) disposé au-dessous d'une partie avant d'un coussin de siège, pour faire monter la face inférieure de la partie avant dudit coussin de siège ;
- un générateur de gaz (14 ; 14A) pour gonfler ledit coussin de sécurité (12 ; 12A) dans un cas d'urgence d'un véhicule ; et
- un couvercle (18 ; 18A) pour recouvrir ledit coussin de sécurité (12 ; 12A), qui s'ouvre ou se dilate en raison de la pression dudit coussin de sécurité (12 ; 12A) au moment du gonflement dudit coussin de sécurité (12 ; 12A),
dans lequel ledit coussin de sécurité (12 ; 12A) est disposé dans un évidement (20 ; 20A) formé sur la face supérieure d'un baquet de siège (8 ; 8A) disposé au-dessous dudit coussin de siège,
et dans lequel ledit couvercle (18 ; 18A) est disposé afin de recouvrir ledit évidement (20 ; 20A),
**caractérisé en ce qu'**il comprend en outre une enveloppe de coussin de sécurité (16, 34) pour entourer ledit coussin de sécurité (12 ; 12A) au moins en partie le long de la direction longitudinale.

2. Dispositif de protection de passager selon la revendication 1, dans lequel ledit coussin de sécurité (12A) est disposé dans un dispositif de retenue (30) formé selon la forme d'une boîte, et dans lequel ledit couvercle (18A) est disposé afin de recouvrir ledit dispositif de retenue (30).
